# EUROPÄISCHE PATENTSCHRIFT

(11) **EP 0 830 076 B1**
(45) Veröffentlichungstag und Bekanntmachung des Hinweises auf die Patenterteilung: **09.08.2000**
(21) Anmeldenummer: 96919783.9
(22) Anmeldetag: 17.05.1996
(51) Int. Cl.: A47G 25/32, A47G 25/14, A47G 25/40, E05B 69/00

(54) **KLEIDERBÜGEL**
CLOTHES HANGER
CINTRE POUR VETEMENTS

(30) Priorität: 19.05.1995 DE 19518316
(43) Veröffentlichungstag der Anmeldung: 25.03.1998
(73) Patentinhaber: Baur, Albert, 86845 Grossaitingen (DE)
(72) Erfinder: Baur, Albert, 86845 Grossaitingen (DE)
(74) Vertreter: Fiener, Josef
(86) Internationale Anmeldenummer: EP9602125
(87) Internationale Veröffentlichungsnummer: WO9636263

(56) Entgegenhaltungen:
- EP-A- 0 382 688
- DE-U- 8 536 129
- DE-U- 9 407 762
- FR-A- 935 064
- GB-A- 2 191 393
- US-A- 3 469 710
- US-A- 3 668 680
- US-A- 4 620 651
- US-A- 4 624 396
- US-A- 4 685 572
- US-A- 4 981 242

## Beschreibung

Die Erfindung betrifft einen Kleiderbügel mit den oberbegrifflichen Merkmalen des Patentanspruches 1.

Ein derartiger Kleiderbügel mit einem Kunststoffrohr ist aus der GB-A-2 191 393 bekannt.

Bei diesem Kleiderbügel mit einer Rastverbindung ist nachteilig, daß die Auflagefläche des Tragbügels sehr schmal ausgebildet ist, so daß empfindliche Kleidungsstücke, wie z. B. Seidenblusen, nach längerer Aufbewahrung in Mitleidenschaft gezogen werden können. Zudem werden diese Kleiderbügel im allgemeinen in einem einzigen Format hergestellt, so daß Kleidungsstücke für besonders breitschultrige Personen, oder im anderen Extrem, für relativ schmalgebaute Personen, von den Endbereichen des Kleiderbügels herunterhängen oder übermäßig stark gespannt werden. Hierdurch wird gerade der Schulterbereich der Kleidungsstücke stark beansprucht, insbesondere wenn die Kleidungsstücke mit den Kleiderbügeln häufig umgehängt werden oder die Kleidungsstücke über Monate auf dem Kleiderbügel aufbewahrt werden.

Es sind zwar vereinzelt im Handel Kleiderbügel mit verbreiterten Schulterstücken vorhanden, jedoch sind diese Kleiderbügel aus spritzgegossenem Kunststoff relativ teuer, da die Spritzgußform teilweise mit Hinterschneidungen versehen sein muß, so daß die Herstellung derartiger Kleiderbügel relativ aufwendig ist. Dies gilt auch für den Kleiderbügel gemäß der US-A-4,981,242, da dort neben zwei Rohrhälften ein spritzgegossenes Mittelteil mit einem Stützdraht vorgesehen ist, so daß die Herstellungskosten relativ hoch sind.

Demzufolge liegt der Erfindung die Aufgabe zugrunde, einen Kleiderbügel zu schaffen, der die vorstehenden Nachteile vermeidet und bei kostengünstiger Produktion einen an die unterschiedlichen Kleidungsstücke anpassungsfähigen und flexiblen Kleiderbügel schafft, der zudem besonders leicht und hinreichend formstabil sein soll.

Diese Aufgabe wird gelöst durch einen Kleiderbügel gemäß den Merkmalen des Patentanspruches 1.

Durch die Verwendung eines durchgehenden, einstückigen Kunststoffrohres als Tragbügel ergibt sich zum einen eine relativ große Auflagefläche für das Kleidungsstück, so daß eine schonende Aufbewahrung gewährleistet ist. Darüberhinaus paßt sich das Kunststoffrohr infolge seiner gummiähnlichen Elastizität an die Schulterkrümmung des Kleidungsstückes an. In vorteilhafter Weise kann dabei die Krümmung des Tragbügels durch einfache Maßnahmen, wie beispielsweise eine Wärmebehandlung in der Fabrikationsstätte an die jeweilige Kleidergröße angepaßt werden. Die Schulterkrümmung kann jedoch auch durch den Benutzer selbst durch einen querverlaufenden Seilzug oder dergleichen auf einfache Weise eingestellt werden. Darüberhinaus ist das Kunststoffrohr, insbesondere in der Ausführung als Schaumstoffrohr, aufgrund der gummiartigen Materialeigenschaften an der Oberfläche weich und rutschsicher, so daß dem Abrutschen der Kleidungsstücke von dem Kleiderbügel entgegengewirkt wird. Weiterhin ist das verwendete Kunststoffrohr sehr leicht und trotz der Elastizität dennoch ausreichend formstabil, so daß das bei Kunststoff-Kleiderbügeln häufig auftretende Abbrechen bei seitlicher Überlastung kaum auftreten kann.

Aufgrund des vorgeschlagenen Materials, insbesondere dem sehr biegsamen, flexiblen Schaumstoffrohr, ergibt sich somit eine individuelle, körpergerechte, nahezu automatische Anpassung an das jeweilige Kleidungsstück. Die Länge des Tragbügels ist hierbei durch einfaches Ablängen im Herstellungsprozeß zu erreichen, so daß eine extrem preisgünstige Herstellung auch für verschiedene Größen erreicht wird, während bei Spritzgußteilen die Werkzeugformen mit entsprechenden Folgekosten geändert werden müßten. Die Längenanpassung an das jeweilige Kleidungsstück läßt sich hierbei durch den Benutzer auch selbst vornehmen, indem das Kunststoffrohr auf die gewünschte Länge abgelängt wird. Auch die Längenvergrößerung ist hierbei durch Einstecken stirnseitiger Endkappen auf einfache Weise möglich, um beispielsweise Kleiderbügel für Kinder-Kleidungsstücke an Jugend-Kleidungsstücke anzupassen. Auch die Einstellung der Biegsamkeit oder Elastizität des Tragbügels läßt sich dadurch Einsetzen von Hülsen in den Rohrhohlraum leicht variieren.

Von weiterem besonderen Vorteil ist die einfache Verbindung des Kunststoffrohres mit dem Halterungsteil, wobei dieses in einfacher Weise in das schaumstoffrohr eingesteckt werden kann, da dieses soweit nachgiebig, aber noch so stabil ist, um einen sicheren Halt für das Halterungsteil zu schaffen. Jedoch können auch bei der Herstellung des Kunststoffrohres entsprechende Einsteckschlitze bereits vorfabriziert werden, so daß die Halterungsteile in einfacher Weise in den oberen Wandungsteil des Kunststoffrohres in Art einer Rastverbindung eingesteckt werden können. Die Halterungsteile selbst sind hierbei bevorzugt als einfache Kunststoffteile ausgebildet, die in ihrer Außenform variabel ausgebildet sein können, beispielsweise in Art von Zahlen, Buchstaben, Symbolen, Werbeaufdrucken und dergleichen, so daß hier je nach Geschmack des Benutzers individuelle Kleiderbügel geschaffen werden können. Weiterhin können an den Halterungsteilen auch zusätzliche Komponenten, wie Spiegel oder elektronische Miniatur-Geräte vorgesehen sein, beispielsweise ein Sprachchip, mit dem Kurzmitteilungen aufgenommen werden können, oder ein Radio, Uhrenwecker, Feuermelder oder eine Alarmanlage, die eine unautorisierte Bewegung des Kleiderbügels meldet.

Weitere vorteilhafte Ausgestaltungen des Kleiderbügels, wie die Unterbringung von Kleinteilen im Rohrhohlraum oder die einfache Anbringung einer Traverse durch Einstecken an den Stirnenden des Tragbügel-Rohres, sind dabei Gegenstand der Unteransprüche.

Nachfolgend werden mehrere Ausführungsbeispiele des vorgeschlagenen Kleiderbügels anhand der Zeichnungen näher erläutert und beschrieben, wobei die Fig. 1 - 5 lediglich den allgemeinen Aufbau beschreiben. Hierbei zeigen:
- Fig. 1: eine schematische Seitenansicht eines Kleiderbügels;
- Fig. 2: eine erweiterte Ausführung des Kleiderbügels gemäß Fig. 1;
- Fig. 3: eine Detaildarstellung zur Verbindung eines Halterungsteils mit dem Tragbügel;
- Fig. 4: eine vergrößerte Darstellung eines Halterungsteils;
- Fig. 5: eine um 90° gedrehte Ansicht des Halterungsteils gemäß Fig. 4 mit zusätzlichen Komponenten; und
- Fig. 6: eine bevorzugte Ausführung des Kleiderbügels aus Fig. 2 mit einem modifizierten Einsteck-Halterungsteil, sowie einer vergrößerten, seitlich herausgezogenen Einzelteilansicht.

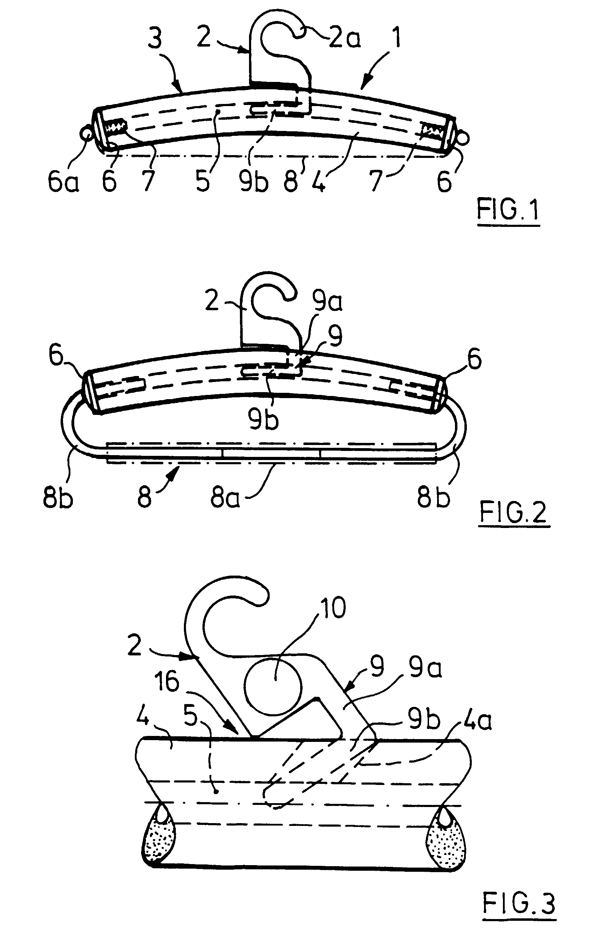

In Fig. 1 ist ein Kleiderbügel 1 schematisch dargestellt, der im wesentlichen aus einem nach oben abkragenden Halterungsteil 2 mit einem Aufhängebügel 2a und einem dazu im wesentlichen in Horizontalrichtung querverlaufenden Tragbügel 3 besteht. Dieser Tragbügel 3 ist hierbei durch ein Kunststoffrohr 4 gebildet, das einen Außendurchmesser von ca. 30 mm aufweist. In bevorzugter Ausführung ist das durchgehende, einstückige Kunststoffrohr 4 hohlzylinderisch ausgebildet, wodurch im Inneren des Kunststoffrohres 4 ein Aufnahmeraum 5 für diverse Kleinutensilien, wie Schreibzeug, eine Miniatur-Kleiderbürste, Halsketten, Schmuckteile, Tablettenröhrchen oder dergleichen gebildet ist. Diese Kleinteile sind dabei stoßsicher aufbewahrt, was insbesondere auf Reisen von Vorteil ist.

An den beiden Stirnseiten des bevorzugt aus Polyurethan-Formschaum hergestellten Kunststoffrohres 4 sind zusätzlich zu der vorstehend beschriebenen Ausführung Endkappen 6 eingesteckt, wobei der mit einer strukturierten, bevorzugt zahnförmigen Außenfläche 7 versehene Zapfen der Endkappen 6 in den Aufnahmeraum 5 hineinragend eingesteckt wird. Durch die hohe Eigenelastizität des Kunststoffrohres 4 werden die Endkappen 6 dabei sicher gehalten. Die Endkappen 6 können dabei auch zur Verlängerung des Kunststoffrohres 4 dienen, beispielsweise in Anpassung an eine wechselnde Kleidergröße.

An den Endkappen 6 können weiterhin Halterungen 6a vorgesehen sein, an denen Rockschlaufen in der Anwendung für Damenbekleidung ausgebildet sind. Diese Halterungselemente 6a können weiterhin zur Fixierung eines querverlaufenden Bandes oder einer Seilschlaufe dienen, wodurch die Krümmung des elastischen Kunststoffrohres 4 beliebig eingestellt werden kann. Hierdurch wird zudem eine Traverse 8 ausgebildet, an der weitere Kleidungsstücke, wie Hosen, Krawatten usw. aufgehängt werden können. Die die Traverse 8 bildende Seilschlaufe kann hierbei ebenso wie das Kunststoffrohr 4 elastisch sein, beispielsweise durch einen ca. achtzig Zentimeter langen Gummiring oder eine Kordelschlaufe gebildet werden. Durch die Länge der Traverse 8 ist somit die konvexe Krümmung des Tragbügels 3 in Anpassung an den Schulterverlauf des jeweiligen Kleidungsstückes optimal anpaßbar. Die Traverse 8 wird hierbei aufgrund der Eigenelastizität und Vorspannung des Kunststoffrohres 4 sicher gehalten, so daß daran Krawatten, Hosen usw. aufgehängt werden können.

In Fig. 2 ist eine weitere Ausführungsform der Traverse 8 dargestellt, nämlich hier eine rohrförmige Ausführung, die bevorzugt teleskopierbar ist. Hierdurch läßt sich in einfacher Weise ebenfalls die obere Krümmung des Tragbügels 3 einstellen, indem die Teleskop-Teile der Traverse 8 gegeneinander verschoben werden. Die nach oben gekrümmten Enden 8b der Traverse 8 sind hierbei in die Endkappen 6 oder direkt in die Stirnseiten des Kunststoffrohres 4 eingesteckt und ragen teilweise in den hohlen Aufnahmeraum 5 des Kunststoffrohres 4 hinein. Die Traverse 8 kann hierbei zur Schonung der daran aufgehängten Kleidungsstücke ebenfalls mit einem Schaumstoffrohr 8a ummantelt sein, wobei aufgrund der relativ hohen Eigenstabilität eines solchen Kunststoffrohres 8a aus Polyurethan-Formschaum die Traverse 8 nicht durchgehend verlaufen muß.

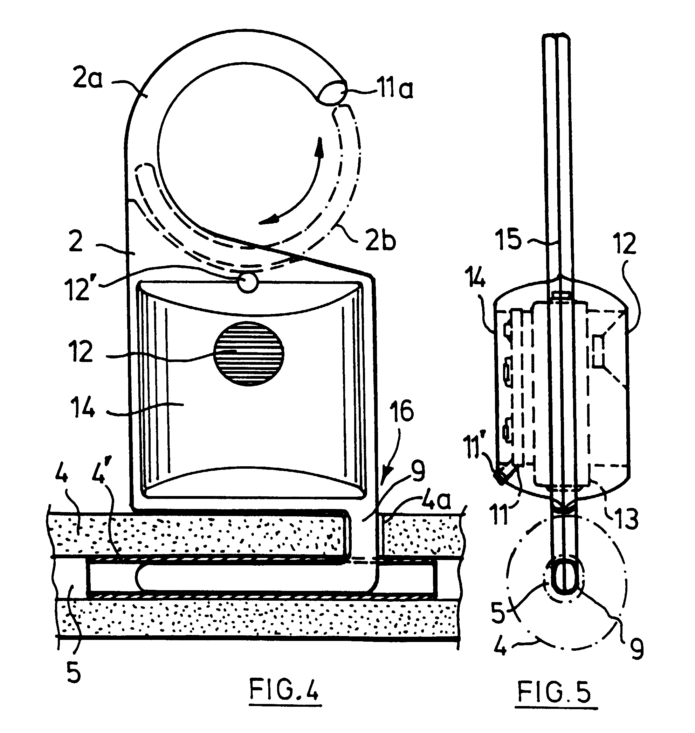

Es sei darauf hingewiesen, daß der Querschnitt des Kunststoffrohres 4 auch elliptisch oder oval sein kann (vgl. Fig. 5), oder auch eine andere Querschnittsform, wie eine abgerundete Dreiecks- oder Vierecksform aufweisen kann. Im Falle eines ovalen oder elliptischen Querschnittes kann hierbei der Benutzer dann durch um 90° versetztes Einstecken des Halterungsteils 2 wählen, ob er die breitere Ovalseite zur noch besseren Abstützung und Druckverteilung gegenüber dem Kleidungsstück wählt oder die aufrechte Anordnung, wodurch sich eine schmälere Bauweise ergibt und eine höhere Festigkeit in der Vertikalrichtung.

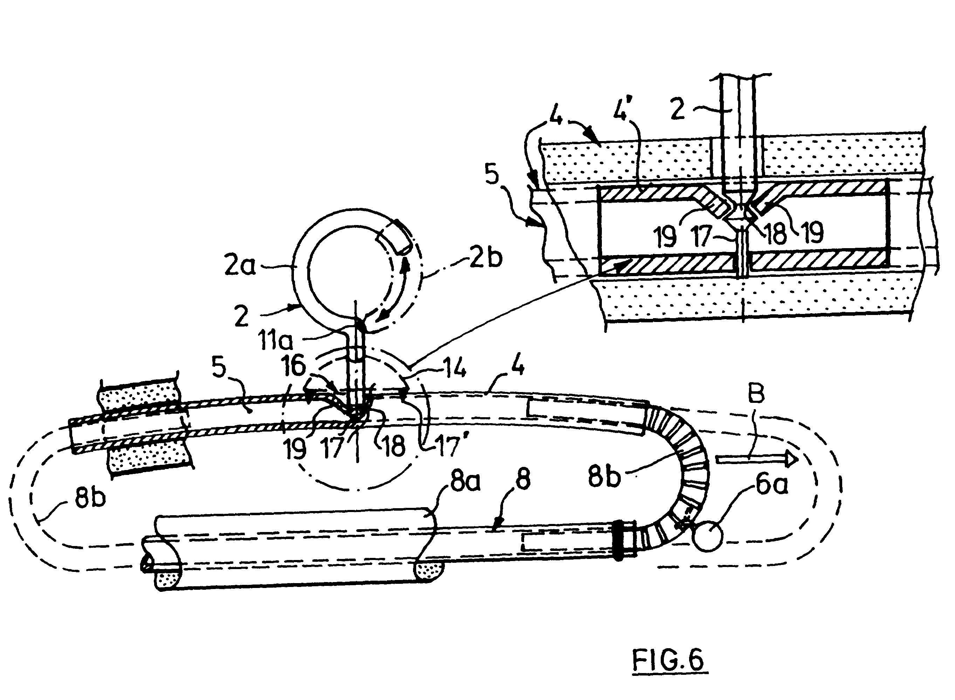

Das in Fig. 6 detailliert dargestellte Halterungsteil 2 des Kleiderbügels 1 weist an seiner Unterseite einen Haken 9 auf, der hier noch senkrecht zum Tragbügel 3 einen kurzen Hakenteil 9a besitzt, der in etwa der Wandstärke des Kunststoffrohres 4 entspricht. Der Hakenteil 9a geht in einen parallel zum Tragbügel 3 verlaufenden Hakenteil 9b über, der zur Bildung einer Rastverbindung 16 in den Aufnahmeraum 5 im Inneren des Kunststoffrohres 4 eingesteckt ist.

Diese Einsteckbewegung des Halterungsteils 2 in das Kunststoffrohr 4 in der Ausführung als Schaumstoffrohr ist in Fig. 3 näher dargestellt. Wie ersichtlich, wird hierbei zunächst das spitze oder abgerundete Ende des Hakenteils 9b in das Kunststoffrohr 4 eingestoßen oder in einen vorgefertigten schmalen Schlitz 4a eingesteckt und dann das Halterungsteil 2 um ca. 30° geschwenkt. Obwohl hierbei aufgrund der Nachgiebigkeit des bevorzugt auch als Rohrisolierung verwendeten Schaumstoffmaterials bei entsprechend stabiler Ausführung des Halterungsteils 2, insbesondere seines Hakens 9 dieser in das Kunststoffrohr 4 hineingedrückt werden kann, ist zur Erleichterung dieser Einfädelbewegung der vorstehend erwähnte kurze Einsteckschlitz 4a in dem Kunststoffrohr 4 vorgesehen, insbesondere wenn dieses aus gegenüber Schaumstoff relativ härterem Material, wie extrudierten Weich-Kunststoff gefertigt ist.

In Fig. 3 ist weiterhin eine weitgehend glatte Fläche 10 vorgesehen, die für Werbeaufdrucke, Embleme oder auch zur Anbringung eines Spiegels benutzt werden kann, der beispielsweise zur Kontrolle des Sitzes einer Krawatte oder eines Schals dienen kann. Der Spiegel kann hierbei selbstverständlich auch durch Galvanisierung der Fläche 10 des Halterungsteils 2 gebildet werden.

In Fig. 4 ist eine Ausführungsform der Rastverbindung 16 des Halterungsteils 2 dargestellt, das in dem Kunststoffrohr 4 durch Einstecken in dem hohlen Aufnahmeraum 5 verankert ist. Dabei ist zur Erhöhung der Ausreißsicherheit im hohlen Aufnahmeraum 5 eine Hülse 4' eingesetzt, deren Länge das Biegeverhalten des Kunststoffrohres 4 mitbestimmt. Im Bereich des Aufhängebügels 2a ist in bevorzugter Ausführung ein Verschlußelement 2b vorgesehen, das durch Verschwenken um ca. 90°(hier entgegen dem Uhrzeigersinn) den Aufhängebügel 2a um eine nicht näher dargestellte Kleiderstange oder einen Bügel in Kraftfahrzeugen vollständig schließt. Insbesondere wenn hierbei das Verschlußelement 2b durch den fast in jedem Kleiderstück vorgesehenen Aufhänger hindurchgeführt wird, wird hierdurch eine Diebstahlsicherung erreicht. Das Verschlußelement 2b kann hierbei mit einem Schloß, beispielsweise einem Zahlenschloß verriegelt werden, jedoch auch mit einer elektronischen Alarmanlage gekoppelt sein, wobei z. B. ein Kontaktknopf 11a am Aufhängebügel 2a geschlossen wird. Diese elektronische Alarmanlage ist bevorzugt an dem Aufhängebügel 2a angeordnet, wobei die Aktivierung beispielsweise über eine sprachgesteuerte Kodierung oder einen Betätigungsschalter 11' (vgl. Fig. 5) erfolgen kann.

Die Unterbringung einer derartigen Miniatur-Alarmanlage 11 im Halterungsteil 2 des Kleiderbügels 1 ist in Fig. 5 schematisch dargestellt. Eine solche Alarmanlage umfaßt beispielsweise einen Lautsprecher 12 oder eine Leuchtdiode 12' (vgl. Fig. 4) zur Alarmabgabe sowie die entsprechenden elektrischen Bauteile, wie den Betätigungsschalter 11' und den Kontaktknopf 11a, der bevorzugt mit dem Verschlußelement 2b in Verbindung steht. Darüberhinaus ist ein Batteriefach 13 zur Stromversorgung der schematisch als Platine angedeutete Alarmanlage 11 in dem Halterungsteil 2 angeordnet. Darüberhinaus können auch noch elektronische Speicherelemente, wie Sprachchips vorgesehen sein, um den Benutzer des Kleiderbügels an bestimmte alltägliche Dinge zu erinnern, oder auch Werbemitteilungen oder Grüße, beispielsweise beim Empfang in einem Restaurant "Herzlich Willkommen" oder "Vielen Dank für Ihren Besuch" zu übermitteln.

Zur Unterbringung derartiger elektronischer Miniatur-Geräte weist das Halterungsteil 2 im Bereich über dem Kunststoffrohr 4 eine entsprechende Ausbauchung 14 auf, wobei diese zugleich der Abstützung eines Kragenteils des aufgehängten Kleidungsstückes dienen kann. Ein derartiges Halterungsteil 2 zur Aufnahme von Elektronikgeräten (neben Alarmanlagen sind bei Reisen auch Radios, Wecker oder dgl. möglich) ist hierbei vorzugsweise zweischalig als Kunststoffbauteil ausgebildet, wobei an einem Rand des Halterungsteils 2 ein Filmacharnier 15 ausgebildet ist, so daB nach Einbau der Elektronikteile die beiden Schalen des Halterungsteils 2 in einfacher Weise zusammengeklipst werden können, und dann in das Kunststoffrohr 4 eingesteckt werden. Durch diese Rastverbindung 16 ist auch ein leichter Wechsel des Halterungsteils 2, beispielsweise zur Veränderung der Werbemitteilung auf der Fläche 10 (vgl. Fig. 3) möglich.

In Fig. 6 ist eine bevorzugte Ausführungsform des Kleiderbügels, ähnlich der Bauart von Fig. 2, vorgesehen. Hierbei ist jedoch im Unterschied zu der Ausführung des Kunststoffrohres 4 als Formschaumteil das Kunststoffrohr 4 mit höherer Festigkeit ausgeführt, so daß ein geringerer Rohrdurchmesser zur erforderlichen Stabilität ausreicht. Dennoch kann dieses stabilere, dennoch elastische Kunststoffrohr 4 noch mit einem Schaumstoffrohr, ähnlich den vorhergehenden Ausführungen, ummantelt sein, wie dies im vergrößerten Teilschnitt dargestellt ist. Durch die höhere Stabilität des Kunststoffrohres 4, wie dieses sehr preisgünstig als Aufputz-Elektroinstallationsrohr zu erwerben ist, ist eine vereinfachte Anbringung des Halterungsteils 2 möglich, nämlich wiederum in Art einer steckbaren Rastverbindung 16. Diese Rastverbindung 16 ist durch kreuzweises Einschlitzen der oberen Rohrwand möglich, so daß eine mit einer Nut versehene Spitze 17 des Halterungsteils 2 beim Einstecken sicher in dem Kunststoffrohr 4 verankert ist.

Als Traverse 8 ist hierbei in besonders einfacher Bauweise ein aus dem Baubereich als Elektroinstallations-Leerrohr bekanntes Kunststoffrippenrohr vorgesehen, das besonders leicht gebogen werden kann, und somit in die offenen Stirnseiten des als Tragbügel 3 dienenden Kunststoffrohres 4 eingeführt werden kann. Wie oben erwähnt, kann hierbei auch diese Traverse 8 durch ein Schaumstoffrohr 8a ummantelt sein. Weiterhin können zur Stabilisierung des als Traverse 8 dienenden Kunststoff-Leerrohres stabilere Kunststoffrohre, ähnlich wie in der Anwendung als Tragbügel 3, in den Hohlraum eingeschoben werden, so daB sich eine besonders hohe Stabilität gegen Durchbiegen beim Aufhängen von schweren Hosen ergibt.

Wie aus Fig. 6 ersichtlich, weist die Rastverbindung 16 in der oberen Rohrwand des Kunststoffrohres 4 eine Spitze 17 mit einer Nut 18 auf, die in Art einer Schnappverbindung von den federnden Zungen 19 des Kunststoffrohres 4 hintergriffen wird. Die Spitze 17 kann hierbei zur Stabilisierung nach unten hin verlängert werden, um auch in die untere Rohrwand des Kunststoffrohrs 4 oder eine darin eingesteckte Hülse 4' einzugreifen. Hierdurch ist eine sichere, dennoch verdrehbare Verankerung des Halterungsteils 2 im Tragbügel 3 erreicht. Das bevorzugt wiederum mit einer hier segmentartigen Ausbauchung 14 für Zusatzteile oder Werbefläche ausgestattete Halterungsteil 2 kann hierbei aus Kunststoff oder Metall, beispielsweise Aluminium hergestellt werden, so daß eine besonders stabile Ausführung der Spitze 17 erreicht wird. Zudem wird hierdurch eine sichere Führung des bogenförmigen Verschlußelementes 2b (hier der Einfachheit halber über dem Aufhängebügel 2a gezeichnet) erreicht, das wiederum bevorzugt mit einem Kontaktknopf 11a einer Alarmanlage gemäß Fig. 5 gekoppelt ist. Auch können für eine nicht-drehbare Verankerung des Halterungsteils 2 zwei oder drei derartiger Spitzen 17', seitlich in Axialrichtung des Tragbügels 3 versetzt angeordnet sein, z. B. an den seitlichen Endkanten der Ausbauchung 14.

Es sei darauf hingewiesen, daß unter dem Begriff Kunststoffrohr auch gummiähnliche Materialen verstanden werden, die eine ähnliche Elastizität wie das bevorzugt verwendete Polyurethan-Schaumstoffrohr aufweisen.

Die Verankerung des Halterungsteiles 2 kann hierbei ebenfalls wieder mit einer Rastverbindung gemäß Fig. 6 erfolgen. Dabei ist ebenfalls die besonders vorteilhafte Erweiterbarkeit durch Endkappen oder das einfache Einstecken der Bogenstücke 8b der Traverse 8 in die Stirnseiten des Kunststoffrohres 4 möglich.

Insgesamt ist somit der Kleiderbügel aus größtenteils im Baustoffhandel erhältlichen, und daher preisgünstigen Materialien zusammengesetzt, wodurch sich ein sehr günstiger Preis ergibt. Zudem kann der Benutzer des Kleiderbügels die Ergänzungen, beispielsweise durch die Traverse selbst schrittweise vornehmen oder durch variable Endkappen eine entsprechende Verbreiterung durchführen. Durch diese einfachen Steckverbindungen eignet sich der Kleiderbügel damit auch zur Anbringung von unterschiedlichen Werbe- oder Hinweissymbolen, so daß der Kleiderbügel auch für Werbungszwecke Verwendung finden kann. Zudem ist der Kleiderbügel mit den in das Kunststoffrohr 4 eingesteckten Bogenstücken 8b einfach durch seitliches Herausziehen gemäß dem Pfeil B breitenveränderbar. An diesen, wie angedeutet, aus Rippenrohren (Elektroinstallations-Leerrohre) bestehenden Bogenstücken 8b sind zur Traverse 8 hin, Halterungselemente 6a z. B. Rockhaken eingesteckt, wobei auch andere Halterungsteile für verschiedene Kleidungsstücke vorgesehen sein können.

## Patentansprüche

1. Kleiderbügel (1) mit einem nach oben abkragenden Halterungsteil (2) zur Halterung des Kleiderbügels an einer Kleiderstange, Garderobe oder dergleichen, und mit einem im wesentlichen querverlaufenden Tragbügel (3) zur Aufnahme von wenigstens einem Kleidungsstück, wobei
der Tragbügel (3) aus einem durchgehenden Kunststoffrohr (4) gebildet ist und das Halterungsteil (2) mittels einer die obere Rohrwand durchsetzenden Rastverbindung (16) eingesteckt ist,
dadurch gekennzeichnet, daß
die Rastverbindung (16) durch eine am Halterungsteil (2) ausgebildete Spitze (17) mit einer Nut (18) gebildet ist, in die federnde Zungen (19) des Kunststoffrohrs (4) eingreifen und die Spitze (17) bis in die eingreifen und die Spitze (17) bis in die untere Rohrwand eingreifend nach unten verlängert ist.

2. Kleiderbügel nach Anspruch 1,
dadurch gekennzeichnet, daß
das Kunststoffrohr (4) aus einem Schaumstoff, insbesondere Polyurethan-Formschaum gebildet ist.

3. Kleiderbügel nach Anspruch 1 oder 2,
dadurch gekennzeichnet, daß
im Inneren des Kunststoffrohres (4) ein Aufnahmeraum (5) zur Aufbewahrung von Kleinutensilien ausgebildet ist.

4. Kleiderbügel nach einem der Ansprüche 1 bis 3,
dadurch gekennzeichnet, daß
die Krümmung des Kunststoffrohres (4) variabel einstellbar ist.

5. Kleiderbügel nach einem der Ansprüche 1 bis 4,
dadurch gekennzeichnet, daß
an den stirnseitigen Enden des Kunststoffrohres (4) Endkappen (6) einsteckbar sind.

6. Kleiderbügel nach einem der Ansprüche 1 bis 5,
dadurch gekennzeichnet, daß
an den offenen Stirnseiten des Kunststoffrohres (4) eine querverlaufende Traverse (8) einsteckbar ist.

7. Kleiderbügel nach Anspruch 6,
dadurch gekennzeichnet, daß
die Traverse (8) mit einem Schaumstoffrohr (8a) ummantelt ist.

8. Kleiderbügel nach Anspruch 6 oder 7,
dadurch gekennzeichnet, daß
die Traverse (8) als Teleskoprohr ausgebildet ist.

9. Kleiderbügel nach einem der Ansprüche 1 bis 8,
dadurch gekennzeichnet, daß
die Außenform des Halterungsteils (2) in Zahlen-, Buchstaben- oder Symbolform ausgebildet ist.

10. Kleiderbügel nach Anspruch 9,
dadurch gekennzeichnet, daß
das Halterungsteil (2) zwischen dem Haken (9) und dem Aufhängebügel (2a) eine im wesentlichen glatte Fläche (10) aufweist.

11. Kleiderbügel nach einem der Ansprüche 1 bis 10,
dadurch gekennzeichnet, daß
das Halterungsteil (2) zwischen der Rastverbindung (16) und
dem Aufhängungsbügel (2a) ein Batteriefach (13) und wenigstens ein Elektronikgerät (11), insbesondere einen elektronischen Sprachchip, ein Radio, einen Wecker, einen Rauchmelder oder eine Alarmanlage aufweist.

12. Kleiderbügel nach einem der Ansprüche 1 bis 11,
dadurch gekennzeichnet, daß
das Halterungsteil (2) im Bereich seines Aufhängebügels (2a) mit einem Verschlußelement (2b) zum Verschließen des Aufhängebügels (2a) ausgestattet ist.

13. Kleiderbügel nach Anspruch 12,
dadurch gekennzeichnet, daß
das Verschlußelement (2b) mit einem Kleidungsteil verbindbar ist und/oder mit dem als Alarmanlage ausgerüsteten Elektronikteil (11) gekoppelt ist.

14. Kleiderbügel nach einem der Ansprüche 1 bis 13,
dadurch gekennzeichnet, daß
das Kunststoffrohr (4) aus dünnwandigem, thermoplastischen Material besteht, insbesondere einem Elektroinstallations-Rippenleerrohr.

## Claims

1. Clothes hanger (1) comprising an upwardly projecting hook (2) to retain said clothes hanger on a clothes rail, coatrack or the like, and comprising a substantially traverse hanger (3) to receive at least one piece of clothing, wherein said hanger (3) is made of a continuous plastic tube (4) and said hook (2) is inserted by means of an engaging connection (16) penetrating the upper tube wall,
characterized in that
the engaging connection (16) is achieved by a head (17) comprising a notch (18) and formed at said hook (2), which notch (18) is engaged by flexible tongues (19) of the plastic tube (4), and said head (17) is elongated downward to engage the lower tube wall.

2. Clothes hanger according to claim 1, characterized in that the plastic tube (4) is made of a foam material, in particular molded polyurethane foam.

3. Clothes hanger according to either claim 1 or claim 2,
characterized in that a receiving section (5) is formed within the plastic tube (4) to store small utensils therein.

4. Clothes hanger according to any of claims 1 to 3,
characterized in that the curvature of the plastic tube (4) is variably adjustable.

5. Clothes hanger according to any of claims 1 to 4,
characterized in that end caps (6) may be inserted into the front ends of the plastic tube (4).

6. Clothes hanger according to any of claims 1 to 5,
characterized in that a laterally extending cross-piece (8) may be inserted into the open front ends of the plastic tube (4).

7. Clothes hanger according to claim 6, characterized in that the cross-piece (8) is covered by a foam tube (8a).

8. Clothes hanger according to either claim 6 or claim 7,
characterized in that the cross-piece (8) is in the shape of a telescopic tube.

9. Clothes hanger according to any of claims 1 to 8,
characterized in that the outline of the hook (2) is shaped in the form of a number, letter or symbol.

10. Clothes hanger according to claim 9, characterized in that the hook (2) has a substantially plain surface (10) between the catch (9) and the hanger hook (2a).

11. Clothes hanger according to any of claims 1 to 10,
characterized in that the hook (2) comprises a battery compartment (13) and at least one electronic device (11), in particular an electronical voice chip, a radio, an alarm clock, a smoke detector or an alarm system, between the engaging connection (16) and the hanger hook (2a).

12. Clothes hanger according to any of claims 1 to 11,
characterized in that the hook (2) is provided with a locking member (2b) in the region of its hanger hook (2a) to close said hanger hook (2a).

13. Clothes hanger according to claim 12, characterized in that the locking member (2b) is adapted to be connected with a clothing element and/or is coupled to the electronic part (11) equipped as an alarm system.

14. Clothes hanger according to any of claims 1 to 13,
characterized in that the plastic tube (4) is made of thin-walled thermoplastics, in particular a ribbed blank pipe for electric installations.

## Revendications

1. Cintre (1) pour vêtements, comprenant une partie de retenue (2) saillant vers le haut en vue de retenir le cintre sur une barre d'accrochage de vêtements, un vestiaire ou un élément similaire, et un arceau de support (3) s'étendant pour l'essentiel transversalement, en vue de recevoir au moins une pièce vestimentaire, l'arceau de support (3) étant formé d'un tube ininterrompu (4) en matière plastique, et la partie de retenue (2) étant emboîtée au moyen d'une solidarisation encliquetable (16) traversant la paroi supérieure du tube,
caractérisé par le fait que
la solidarisation encliquetable (16) est formée d'une pointe (17) ménagée sur la partie de retenue (2), avec une gorge (18) dans laquelle pénètrent des languettes élastiques (19) du tube (4) en matière plastique, et la pointe (17) est prolongée vers le bas en pénétrant jusque dans la paroi inférieure du tube.

2. Cintre selon la revendication 1,
caractérisé par le fait que
le tube (4) en matière plastique est constitué d'une mousse, notamment d'une mousse de polyuréthanne venue de moulage.

3. Cintre selon la revendication 1 ou 2,
caractérisé par le fait
qu'un réceptacle (5) est aménagé à l'intérieur du tube (4) en matière plastique, en vue du stockage de petits ustensiles.

4. Cintre selon l'une des revendications 1 à 3,
caractérisé par le fait que
la courbure du tube (4) en matière plastique est réglable de manière variable.

5. Cintre selon l'une des revendications 1 à 4,
caractérisé par le fait que
des bouchons extrêmes (6) sont emboîtables aux extrémités frontales du tube (4) en matière plastique.

6. Cintre selon l'une des revendications 1 à 5,
caractérisé par le fait
qu'une traverse (8), s'étendant transversalement, peut être emboîtée aux faces extrêmes ouvertes du tube (4) en matière plastique.

7. Cintre selon la revendication 6,
caractérisé par le fait que
la traverse (8) est enrobée d'un tube (8a) en mousse.

8. Cintre selon la revendication 6 ou 7,
caractérisé par le fait que
la traverse (8) est réalisée sous la forme d'un tube télescopique.

9. Cintre selon l'une des revendications 1 à 8,
caractérisé par le fait que
la configuration extérieure de la partie de retenue (2) se présente sous la forme d'un nombre, d'une lettre ou d'un symbole.

10. Cintre selon la revendication 9,
caractérisé par le fait que
la partie de retenue (2) comporte une surface (10), pour l'essentiel lisse, entre le crochet (9) et l'arceau de suspension (2a).

11. Cintre selon l'une des revendications 1 à 10,
caractérisé par le fait que
la partie de retenue (2) présente, entre la solidarisation encliquetable (16) et l'arceau de suspension (2a), un compartiment (13) de batterie et au moins un appareil électronique (11), en particulier une puce électronique parlante, une radio, un réveil, un détecteur de fumées ou une installation d'alarme.

12. Cintre selon l'une des revendications 1 à 11,
caractérisé par le fait que
la partie de retenue (2) est équipée d'un élément d'obturation (2b) dans la région de son arceau de suspension (2a), en vue d'obturer ledit arceau de suspension (2a).

13. Cintre selon la revendication 12,
caractérisé par le fait que
l'élément d'obturation (2b) peut être relié à une partie d'habillage, et/ou est couplé à la partie électronique (11) conçue comme une installation d'alarme.

14. Cintre selon l'une des revendications 1 à 13,
caractérisé par le fait que
le tube (4) en matière plastique est constitué d'une matière thermoplastique à paroi mince, en particulier d'un tube annelé pour installations électriques.
